# EUROPÄISCHE PATENTSCHRIFT

(11) **EP 3 495 586 B1**
(45) Veröffentlichungstag und Bekanntmachung des Hinweises auf die Patenterteilung: **19.02.2020**
(21) Anmeldenummer: 17205359.7
(22) Anmeldetag: 05.12.2017
(51) Int. Cl.: E04H 4/00, A63B 69/00

(54) **SURFANLAGE**
SURFING FACILITY
INSTALLATION DE SURF

(43) Veröffentlichungstag der Anmeldung: 12.06.2019
(73) Patentinhaber: Action Team Veranstaltungs GmbH, 82152 Martinsried (DE)
(72) Erfinder: Klimaschewski, Rainer, 82152 Martinsried (DE)
(74) Vertreter: Wiese, Gerhard

(56) Entgegenhaltungen:
- EP-A1- 2 356 298
- WO-A1-2013/078443
- WO-A1-2015/188219
- US-A1- 2003 180 095

## Beschreibung

Die Erfindung betrifft eine mobil oder auch stationär einsetzbare Surfanlage gemäß dem Oberbegriff des Patentanspruchs 1.

Eine gattungsgemäße Surfanlage ist aus der auf denselben Anmelder zurückgehenden EP 2 356 298 B1 bekannt. Bei dieser bekannten Surfanlage strömt das Wasser eine Rampe hinunter und trifft unten auf eine stehende oder langsamer fließende Wassermasse. Deren Widerstand führt beim die Rampe herabströmenden Wasser zu einer Ausbildung einer sogenannten "stehenden Welle". Ein rechteckiges Wellenbecken ermöglicht dabei auch ein seitliches Surfen quer zur Strömungsrichtung, das aber durch die relativ geringe Breite des Wellenbeckens begrenzt wird.

Aufgabe der Erfindung ist es, eine Surfanlage zu schaffen, mittels der eine stehende Welle noch besser genutzt werden kann.

Diese Aufgabe wird durch eine Surfanlage mit den Merkmalen des Anspruchs 1 gelöst. Vorteilhafte Ausgestaltungen der Erfindung sind in den Unteransprüchen angegeben.

Erfindungsgemäß erfolgt die Erzeugung einer bewegten oder wandernden "stehenden" Welle dadurch, dass wenigstens zwei im Wesentlichen parallel zur Fließrichtung des Wassers vor und/oder auf einer Rampe oder einem Wehrbereich angeordnete, wenigstens einen Strömungskanal definierende Wände mittels wenigstens eines Antriebs quer zur Fließrichtung des die Rampe herabströmenden Wassers bewegbar sind und dadurch beim Auftreffen auf die stehende oder langsamer fließende Wassermasse eine wandernde, sich quer zur Fließrichtung fortbewegende stehende Welle im Wellenbecken erzeugen. Der Surfer kann somit der sich im Wellenbecken quer zur Rampe fortbewegenden Welle folgen.

Da der Strömungskanal nur eine begrenzte Breite aufweist, ist der erforderliche Energie-Aufwand zur Erzeugung der Welle dennoch nicht größer, sondern eher geringer als bei der eingangs genannten Surfanlage. Die erfindungsgemäße Surfanlage verbindet somit einen geringstmöglichen Energieaufwand mit einem größtmöglichen Nutzen für einen oder mehrere Surfer. Abgesehen von einer Reduzierung des Energieaufwandes ist ein weiterer Vorteil eine erheblich längere Surfstrecke ohne Wendemanöver.

Mit dem Begriff "stehende Welle" ist eine in Strömungsrichtung des Wassers gesehen stabil ausgebildete Welle gemeint, die sich gemäß der Erfindung jedoch zusätzlich als "wandernde Welle" quer zur Strömungsrichtung im Wellenbecken oder in einem Flussbett weiterbewegt und einem oder mehreren Surfer(n) dadurch das Surfen auf einer Welle auch über einen längeren Weg ermöglicht, ohne dass er ständig Wendebewegungen machen muss. Anstelle eines das Wellenbecken umgebenden Hauptbeckens kann auch ein Fluss, ein See oder ein Meeresbereich dienen.

Wenn in dieser Anmeldung im Zusammenhang mit der Bewegung der wenigstens einen Strömungskanal begrenzenden Wände der Begriff "quer zur Strömungsrichtung auf der Rampe bewegbar" verwendet wird, sind davon nicht nur exakt im rechten Winkel zur Falllinie der Rampe erfolgende Bewegungen umfasst, sondern alle Bewegungen, die eine Komponente quer zur Rampe umfassen. Die Wände des wenigstens einen Strömungskanals können somit auch schräg zur Falllinie der Rampe angeordnet sein.

Wenn in dieser Anmeldung von einer "Rampe" gesprochen wird, ist damit sowohl eine einer Pumpenanlage strömungsmäßig nachgelagerte abfallende Fläche in einer künstlichen Surfanlage als auch ein abfallender Bereich eines Flussbettes, etwa im Bereich eines Wehrs eines natürlich fließenden Gewässers gemeint. Eine Rampe kann auch als geneigte Fläche oder Plattform mit Seitenwänden schwimmend oder fest verankert in einem Gewässer ausgebildet sein.

In einer alternativen Ausführungsform ist ein Wellenbecken einer künstlichen Surfanlage in Form eines Kreissektors mit einem Kreiswinkel (Zentriwinkel) zwischen 10° und 360° gebildet. Die den Strömungskanal begrenzenden Wände führen bei dieser Ausführungsform bevorzugt eine Schwenkbewegung um den Kreismittelpunkt aus.

Die Bewegung der den Strömungskanal begrenzenden Wände kann als alternierend hin- und hergehende Schwenkbewegung oder bei einem einen Vollkreis bildenden Wellenbecken mit einem Kreiswinkel von 360°auch als durchgehende Rotationsbewegung in nur eine Richtung erfolgen.

Die Bewegung kann aber bei allen Ausführungsformen gemäß der Erfindung ebenso in Form einer translatorischen Bewegung oder als überlagert rotatorisch-translatorische Bewegung des Strömungskanals quer zur normalen Fließrichtung des Wassers erfolgen.

Gemäß einer vorteilhaften Weiterbildung ist der Wasserzulauf bei einer Surfanlage mit einem Wellenbecken in Form eines Kreissektors im Bereich des Mittelpunkts des Kreissektors angeordnet. Dadurch wird unabhängig von der aktuellen Position des Strömungskanals immer eine gleich große Wassermenge durch den Strömungskanal geführt. Die geförderte Wassermenge hängt dabei ausschließlich von der Leistung und der Anzahl der zugeschalteten Pumpen ab.

Der wenigstens eine Strömungskanal kann gemäß einer alternativen Ausführungsform auch von einem quer zur Strömungsrichtung rotatorisch, translatorisch oder überlagert rotatorisch-translatorisch bewegbaren Rohr oder Schacht gebildet sein, dessen Wände dann die den Strömungskanal begrenzenden Wände im Sinne des Hauptanspruchs bilden.

Gemäß einer vorteilhaften Ausgestaltung der Erfindung ist vorgesehen, dass die einen Strömungskanal begrenzenden Wände mittels einer Kulisse mit dem Antrieb verbunden sind und während einer Schwenkbewegung des Strömungskanals im Wesentlichen parallel geführt werden. Bevorzugt kann die Geschwindigkeit der Schwenkbewegung mittels des Antriebs verändert werden, wodurch die Anforderungen an die jeweils im Wellenbecken aktiven Surfer angepasst werden können.

Besonders vorteilhaft ist es, wenn die Pumpenanlage zur Dosierung der Fördermenge des Wassers im Wasserzulauf eine oder mehrere in ihrer Förderleistung veränderbare und/oder einzeln oder in Gruppen zuschaltbare Pumpeneinheiten umfasst. Dadurch kann die Wassermenge und mit dieser in Verbindung mit einer optional zusätzlich möglichen Veränderung der Breite des Strömungskanals auch die Höhe und die Geschwindigkeit des die Rampe herabfließenden Wasserstroms verändert werden, wodurch auch die Höhe der wandernden Welle im Wellenbecken beeinflusst wird. Hiermit kann auf den jeweiligen Leistungsstand der im Wellenbecken befindlichen Surfer Rücksicht genommen werden. Mittels der erfindungsgemäßen Surfanlage kann somit vom Anfänger bis zum Surfprofi immer eine geeignete Welle erzeugt werden.

Die Rampe in Form einer flachen oder - bei einem kreisförmigen oder teilkreisförmigen Wellenbecken - kegelstumpfförmigen schiefen Ebene ist an ihrem oberen Ende mit einer die Strömung vergleichmäßigenden Fließstrecke verbunden und ihr unteres Ende ist bevorzugt in einem Wellenbecken gelagert. Das Wellenbecken kann alternativ auch von einem Fluss, einem See oder einem Meeresbereich gebildet werden.

Die Form und Höhe der stehende Welle wird in der erfindungsgemäßen Surfanlage bevorzugt auch dadurch beeinflusst, dass das mit einer ersten Strömungsgeschwindigkeit schnell die Rampe herabfließende Wasser über wenigstens eine vom unteren Ende der Rampe in Strömungsrichtung beabstandet angeordnete, verstellbare Leitvorrichtung geleitet wird. Die Leitvorrichtung kann als fester Einbau, als bezüglich seiner Lage und Ausrichtung verstellbarer Einbau, als komplett versenkbarer Einbau oder als längs einer Führung bewegbares Bauteil ausgebildet sein, wobei die Führung bei einem kreisförmigen oder kreissektorförmigen Wellenbecken dann bevorzugt auf einer zum Mittelpunkt des Kreissektors konzentrischen Bahn erfolgt. Die Leitvorrichtung kann als schwenkbarer Floater unmittelbar am Boden des Wellenbeckens oder bevorzugt auf einem gegenüber dem Boden des Wellenbeckens erhabenen Sockel angeordnet sein.

Durch eine verstellbare Vorrichtung zur Abflussregulierung ist das Wasser-Niveau im Wellenbecken bevorzugt einstellbar. Diese Abflussregulierung beeinflusst neben der zweiten langsameren Fließgeschwindigkeit, auf die das die Rampe mit der ersten, höheren Geschwindigkeit herabströmende Wasser auftrifft, auch eine Rückströmung, die auf der Rückseite der Welle am Boden des Wellenbeckens zur Welle zurück strömt und die Ausbildung der Welle ebenfalls mit beeinflusst. Die verstellbare Vorrichtung zur Abflussregulierung ist bevorzugt so ausgebildet, dass das Wasser in verschiedenen übereinander und/oder nebeneinander angeordneten Ebenen dosiert aus dem Wellenbecken abgelassen oder in diesem zurückgestaut werden kann. Dadurch ist mittels einer gezielten Einstellung der Ober- und Unterströmung die auf die Rückseite der surfbaren Welle einwirkende Rückströmung gezielt beeinflussbar und einstellbar.

Vorteilhaft ist vorgesehen, dass dem auch als Fließstrecke bezeichneten Wasserzulauf mehrere nebeneinander angeordnete Pumpeneinheiten vorgelagert sind. Die Fließstrecke stellt ein relativ großes Reservoir dar, das die von den verschiedenen Pumpeneinheiten geförderte Wassermenge homogenisiert. Dadurch können bei geringerem Wasserbedarf zur Erzeugung einer auch für Surf-Anfänger geeigneten niedrigeren Welle beispielsweise auch einzelne Pumpen in ihrer Förderleistung gedrosselt oder ganz abgeschaltet werden, ohne dass dies über die Breite der Rampe gesehen zu einer unterschiedlichen Schichtdicke des Wasserstromes führen würde.

Bevorzugt ist jede der mehreren Pumpeneinheiten mit jeweils einer Pumpe versehen, die Wasser aus dem Hauptbecken oder dem die Surfanlage umgebenden natürlichen Gewässer ansaugt und zum Wasserzulauf (Fließstrecke) stromauf der Rampe fördert. Dabei ist zur Regulierung der zum Wasserzulauf (Fließstrecke) geförderten Gesamtwassermenge bevorzugt die Förderleistung der Pumpen regelbar und/oder die mehreren Pumpen sind einzeln oder in Gruppen zu- und abschaltbar.

Die Seitenwände der Fließstrecke sind zur Veränderung der Breite und/oder des Winkels der Wasserzufuhr zum Strömungskanal vorzugsweise verstellbar gelagert. Dadurch bestehen zusätzlich zur Regulierung der Wasserfördermenge weitere Beeinflussungs-Möglichkeiten für die stehende Welle. Es ist dadurch auch eine Anpassung von deren Höhe für verschiedene Leistungsstufen der Surfer möglich.

In einer mobilen Surfanlage mit einer begrenzten zirkulierenden Wassermenge ist es besonders vorteilhaft, wenn das Wellenbecken, die Pumpenkammern und der Sammelraum von einem Hauptbecken umgeben sind. Die Trennung des höher angeordneten Wellenbeckens vom Hauptbecken garantiert darüber hinaus, dass nur eine definierte Wassermasse - nämlich die im Wellenbecken befindliche - den Widerstand für das von der Rampe herabströmende Wasser bildet. Die Ausbildung einer stehenden Welle wird dadurch wesentlich besser berechenbar und eindeutiger reproduzierbar.

Die Trennung zwischen Wellenbecken und Hauptbecken ist dabei vorzugsweise mittels der Vorrichtung zur Abflussregulierung regulierbar. Diese Vorrichtung kann vorzugsweise sowohl die Stauhöhe im Wellenbecken als auch den Grad der Durchlässigkeit verändern, beispielsweise durch zwei gegeneinander verschiebbar gelagerte Gitterblenden oder Lochblenden oder durch mehrere übereinander und/oder nebeneinander angeordnete, einzeln hinsichtlich ihrer Öffnungsweite ansteuerbare Klappen. Damit werden die Strömungsgeschwindigkeit des Wassers im Wellenbecken und der dem von der Rampe herabströmenden Wasser entgegengesetzte Widerstand als wichtige Parameter für die Ausprägung von Form und Größe einer stehenden Welle einstellbar.

Die Leitvorrichtung wird gemäß einer ersten Ausführungsform von wenigstens einem Leitprofil gebildet, das bevorzugt nicht nur in seinem Anstellwinkel bezüglich der Strömung veränderbar ist, sondern auch in seinem Abstand zum unteren Ende der Rampe. Optional kann das Leitprofil auch durch teleskopisch gegeneinander verschiebbare Teile in seiner Länge veränderbar sein. Die Leitvorrichtungen können alternativ oder ergänzend zu den Leitprofilen auch von wenigstens einer Düsenleiste gebildet werden, die mit wenigstens einer Düse versehen ist, welche mittels wenigstens einer Pumpe mit unter einem Druck gefördertem Wasser beaufschlagbar ist.

Gemäß einer alternativen Ausführungsform ist vorgesehen, dass das Leitprofil über die Breite des Wellenbeckens in mehrere einander benachbarte Leitprofile unterteilt ist. Die mehreren einander benachbarten Leitprofile können dabei zur Beeinflussung der Wellenform der Welle über die Länge und/oder über die Breite des Wellenbeckens quer oder schräg zur Strömung an unterschiedlichen Positionen angeordnet werden. Diese Anordnung an unterschiedlichen Positionen wird dadurch erleichtert, dass am Boden des Wellenbeckens mehrere Halterungen bzw. Führungen zur Befestigung oder bevorzugt zur verschiebbaren Lagerung der Leitprofile vorgesehen sind.

Die Leitprofile sind im Bereich ihrer Vorderkanten schwenkbar gelagert und ihre Hinterkante ist mittels einer Verstellmechanik verstellbar. Die Verstellmechanik kann beispielsweise von einem Pneumatikzylinder gebildet werden. Das Schwenklager im Bereich der Vorderkanten der Leitprofile ist besonders bevorzugt auf einem vom Boden des Wellenbeckens emporragenden Sockel angeordnet.

In einer Variante sind die Leitprofile zumindest in einem Teil ihres Schwenkbereichs frei floatend gelagert. Dabei erfolgt beispielsweise mittels einer Verstellmechanik eine erste Ausstellbewegung der Hinterkante und der übrige Teil der Ausstellbewegung stellt sich aufgrund des strömungsbedingten Unterdrucks auf der Oberseite der Leitprofile selbsttätig ein. Eine Begrenzung beispielsweise in Form eines zwischen Hinterkante des Leitprofils und dem Boden des Wellenbeckens angeordneten vorzugsweise verstellbaren Bandes kann dabei den maximalen Ausstellwinkel sinnvoll begrenzen, so dass es nicht zu einem plötzlichen Abriss der Strömung und einem Zusammenfallen der Welle kommt. Im Gegensatz zu den relativ großen und nahe an der Wasseroberfläche angeordneten wellenformenden Körpern bei anderen bekannten Surfanlagen (siehe beispielsweise US 6 629 803 B1) befindet sich das hintere Ende des Leitprofils nicht im Bereich der von den Surfern befahrenen stehenden Welle, sondern in einem relativ bodennahen Bereich des Wellenbeckens unter einer Welle mit einer erheblichen Wasserschichtdicke, so dass sturzbedingte Verletzungen von diesem Bauteil nicht hervorgerufen werden können.

In einer bevorzugten Variante sind die Leitvorrichtungen (Leitprofile, Düsenleisten, Sockel) bevorzugt mittels eines hydraulischen Antriebs komplett im Boden des Wellenbeckens versenkbar, so dass das Wellenbecken dann mit vollständig glattem Boden auch als Schwimmbecken nutzbar ist.

Eine weitere Einstell-Möglichkeit für die Welle kann dadurch gebildet werden, dass ein oberes Lager im Bereich des oberen Endes der Rampe mitsamt der Fließstrecke mittels einer Verstellmechanik in seiner Höhe verstellbar ist.

Schließlich wird eine weitere vorteilhafte Beeinflussung der Welle dadurch ermöglicht, dass der Wasserstand im Wellenbecken und die Abströmmenge des Wassers aus dem Wellenbecken durch die mittels einer Verstellmechanik verstellbaren Vorrichtung zur Abflussregulierung an deren vom unteren Ende der Rampe stromab liegenden Rückwand regelbar ist, von wo das Wasser ins Hauptbecken oder in das die Surfanlage umgebende natürliche Gewässer zurückströmt. Der sich durch diesen Rückstau einstellende Rückstromwirbel auf der Rückseite erleichtert einem vom Surfbrett gefallenen Surfer auch das Stehen im der Welle nachgelagerten Bereich des Wellenbeckens und das Aussteigen aus dem Wellenbecken.

Vor dem oberen Rand der Rampe ist bevorzugt ein Egalisator angeordnet, der aus mehreren, bevorzugt bündig nebeneinander angeordneten, röhrenförmigen Hohlkörpern besteht, deren Längsachsen im Wesentlichen senkrecht zum unteren Ende der Rampe angeordnet sind. Durch den Egalisator wird das durch den Strömungskanal auf die Rampe fließende Wasser unabhängig vom jeweiligen Schwenkwinkel des Strömungskanals wieder so ausgerichtet, dass es im Wesentlichen senkrecht zu den quer im Wellenbecken angeordneten Leitprofilen (Floatern) auf diese zuströmt. Der Egalisator sorgt zusätzlich für Verwirbelungen und reichert das Wasser dadurch zusätzlich mit Luftbläschen an, die für ein größeres Volumen und ein weicheres Wasser in der surfbaren Welle sorgen.

Eine weitere vorteilhafte Weiterbildung der Erfindung sieht vor, dass im Wellenbecken und/oder im Bereich der Rampe wenigstens ein quer zur Fließrichtung verschiebbarer Strömungsteiler angeordnet werden kann. Der wenigstens eine Strömungsteiler ist dabei nicht nur im Wellenbecken verschiebbar gelagert, sondern optional auch in unterschiedlichen Positionen ins Wellenbecken einsetzbar und auch komplett aus diesem entnehmbar. Mit diesem Strömungsteiler bzw. diesen Strömungsteilern lässt sich das Wellenbecken in einen oder mehrere Teilbereiche unterteilen und dadurch an unterschiedliche Anforderungen anpassen. Bei einem ganz auf die Seite geschobenen Strömungsteiler steht die volle Breite des Wellenbeckens zur Verfügung. Ist der Strömungsteiler in eine Zwischenposition verschoben, in der er das Wellenbecken in zwei gleich große oder unterschiedlich große Teilbereiche unterteilt, kann der Strömungskanal mit seiner rotatorischen, translatorischen oder überlagert rotatorisch-translatorischen Bewegung nur einen Teilbereich bestreichen, so dass bei geringerem Betrieb auf der Surfanlage mit einer geringeren Förderleistung dennoch ein Teilbetrieb in einem der Teilbereiche möglich ist. Die verschiedenen Teilbereiche können auch mittels mehrerer Strömungskanäle mit unterschiedlichen Wassermengen und Geschwindigkeiten beaufschlagt werden. Dadurch kann beispielsweise ein durch den Strömungsteiler abgeteilter erster Bereich des Wellenbeckens mit einer geringeren Höhe der surfbaren Welle Surf-Anfängern zur Verfügung gestellt werden, während ein anderer zweiter Bereich des Wellenbeckens mit einer höheren surfbaren Welle fortgeschrittenen Surfern zur Verfügung gestellt wird.

Nachfolgend werden Ausführungsbeispiele der erfindungsgemäßen Surfanlage unter Bezugnahme auf die Zeichnungen näher erläutert.
Es zeigt:
- Fig. 1: einen schematischen Längsschnitt durch die Surfanlage bei abgeschalteten Pumpen;
- Fig. 2: einen schematischen Längsschnitt durch die Surfanlage bei eingeschalteten Pumpen;
- Fig. 3: eine schematische Draufsicht auf die Surfanlage;
- Fig. 3A: eine schematische Draufsicht auf eine Surfanlage mit einem sich gegenüber den Wasserzulauf verbreiternden Wellenbecken;
- Fig. 4: eine erste quer zur Strömung auf einer Linie ausgerichtete Anordnung mehrerer Leitvorrichtungen;
- Fig. 5: eine zweite quer zur Strömung versetzt zueinander ausgerichtete Anordnung mehrerer Leitvorrichtungen;
- Fig. 6: eine dritte schräg zur Strömung ausgerichtete Anordnung mehrerer Leitvorrichtungen;
- Fig. 7: eine Variante, bei der die Leitvorrichtungen von Düsen bzw. von Düsenleisten gebildet sind;
- Fig. 8: eine Draufsicht auf eine erfindungsgemäße Surfanlage, bei der das Wellenbecken einem Kreissektor mit einem Zentriwinkel von annähernd 90° entspricht;
- Fig. 9: eine Draufsicht auf eine erfindungsgemäße Surfanlage, bei der das Wellenbecken einem Vollkreis entspricht mit zwei um 180° versetzt zueinander angeordneten Paaren von bewegbaren, zwei Strömungskanäle begrenzenden Wänden;
- Fig. 10: eine Draufsicht auf eine Alternative zur Figur 9 mit einem kreisförmigen Wellenbecken und drei um 120° versetzt zueinander angeordneten Paaren von bewegbaren, drei Strömungskanäle begrenzenden Wänden;
- Fig. 11: eine schematische Darstellung einer erfindungsgemäßen Vorrichtung bei einer Verwendung in einem natürlichen Flusslauf;
- Fig. 12: eine Seitenansicht auf ein auf einem Sockel mit einer ansteigenden vorderen Flanke angeordnetes Leitprofil (Floater);
- Fig. 13: einen Längsschnitt durch einen die Strömung des Wassers ausrichtenden Egalisator gemäß der Schnittlinie XIII-XIII in Fig. 3;
- Fig. 14: ein mittels eines Strömungsteiler zusätzlich auch in zwei Teilbereiche unterteiltes Wellenbecken;
- Fig. 14A: eine Alternative zur Figur 14, bei der sich der Strömungsteiler zusätzlich auch in den Bereich der Rampe hinein erstreckt; und
- Fig. 15: eine alternative Position zur Figur 14, bei der der Strömungsteiler an einer Seitenwand anliegt.

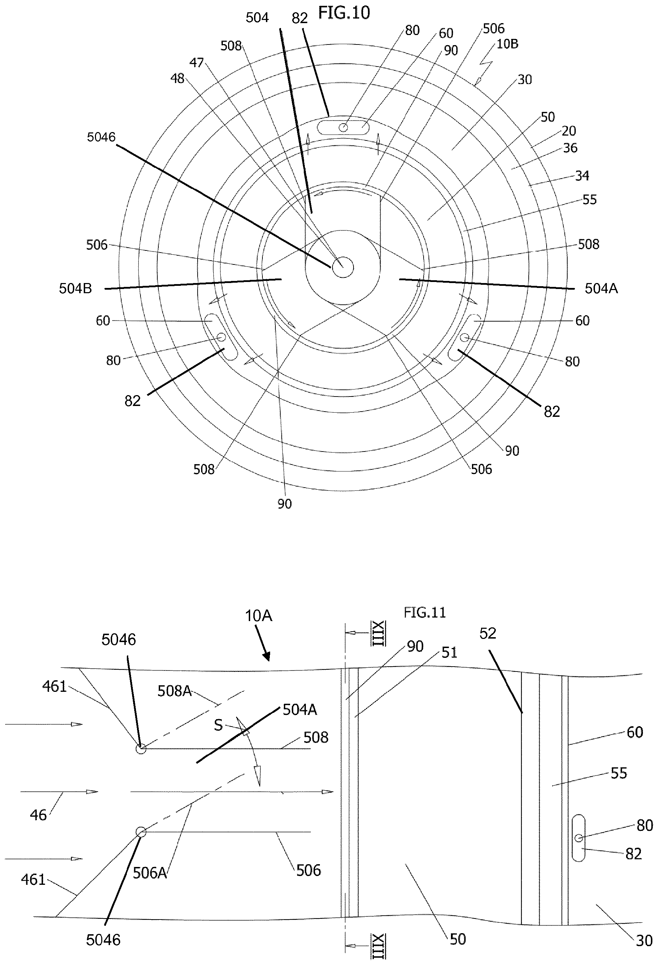

Die Darstellung in den Figuren ist rein schematisch und keinesfalls maßstäblich zu sehen. Die in den Figuren dargestellte Surfanlage 10 wird gebildet von einem wannenförmigen Hauptbecken 20, welches alle übrigen Komponenten aufnimmt und das für den Betrieb der Surfanlage 10 benötigte Wasser in einem geschlossenen Kreislauf hält. Innerhalb des Hauptbeckens 20 ist gegenüber dessen Boden erhöht auf Stützen 32 ein Wellenbecken 30 angeordnet. Abweichend davon werden das Wellenbecken 30 und das Hauptbecken 20 bei der in Figur 11 gezeigten Ausführungsform von einem Flussbett gebildet. Wellenbecken 30 und Hauptbecken 20 können bei einem Einsatz in einem natürlichen Gewässer, wie einem See oder einem Meeresbereich auch von diesem gebildet sein.

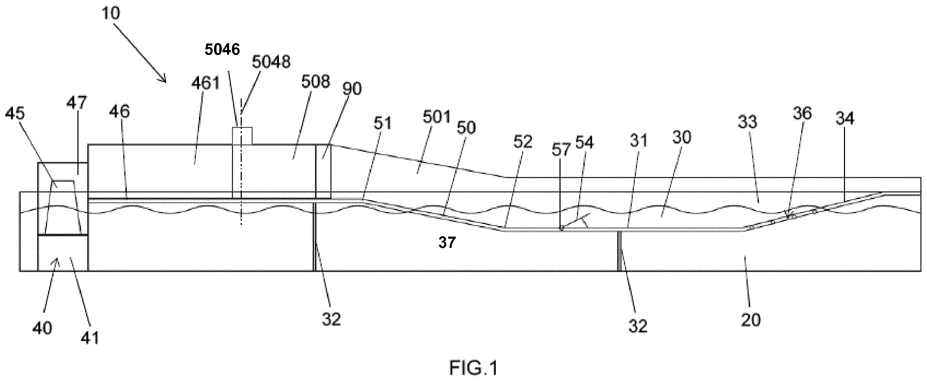

Das Wellenbecken 30 erstreckt sich abgesehen von dem in den Figuren 1 bis 3A linken Teil des Hauptbeckens 20 über einen großen Teil von dessen Länge und Breite. Es weist jedoch aufgrund des gegenüber dem Hauptbecken 20 erhöhten Bodens 31 eine geringere Tiefe auf. Entsprechend kleiner ist auch die im Wellenbecken 30 befindliche Wassermasse gegenüber der gesamten Wassermasse der Surfanlage 10.

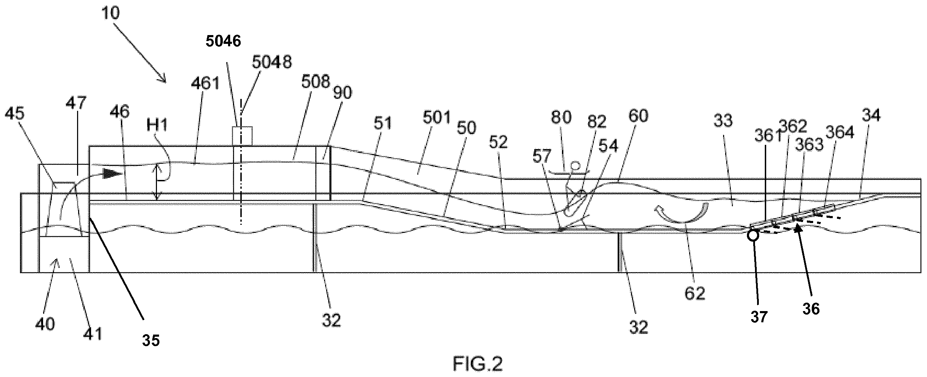

Das Wellenbecken 30 wird zu beiden Seiten von zwei Seitenwänden 33, an seiner rechten Stirnseite von einer Rückwand 34 und an seiner linken Stirnseite von einer Vorderwand 35 begrenzt. In der Rückwand 34 ist eine Vorrichtung zur Abflussregulierung 36 ausgebildet, über welche Wasser aus dem Wellenbecken 30 in das Hauptbecken 20 zurückfließen kann (siehe Fig. 2).

Die Vorrichtung zur Abflussregulierung 36 ist beispielsweise durch mehrere übereinander und/oder wahlweise auch nebeneinander angeordnete, getrennt mehr oder weniger weit aufschwenkbare oder vollständig verschließbare Klappen 361, 362, 363, 364 gebildet, die mittels wenigstens einer Verstellmechanik 37 vorzugsweise separat verstellbar sind.

Anstelle der Klappen 361, 362, 363, 364 können auch gegeneinander verschiebbare Gitter mit mehr oder weniger freigegebenen oder verschlossenen Durchtrittsöffnungen vorgesehen sein. Eine weitere Alternative der Vorrichtung zur Abflussregulierung 36 ist ein doppeltes, gegenüber der Rückwand 34 mittels einer Verstellmechanik 37 in seiner Höhe verstellbares Wandteil, so dass dadurch die Höhe des Wasserspiegels im Wellenbecken 30 und damit auch die gesamte im Wellenbecken 30 vorhandene Wassermasse veränderbar ist.

An der dem Wellenbecken 30 zugewandten Innenseite der Vorrichtung zur Abflussregulierung 36 ist aus Sicherheitsgründen ein relativ engmaschiges Sieb oder Gitter angeordnet, damit sichergestellt ist, dass nur Wasser aus dem Wellenbecken 30 in das Hauptbecken 20 zurückströmt und keine Personen, die aufgrund eines Sturzes von der Strömung im Wellenbecken 30 mitgerissen werden oder von diesen verlorene Gegenstände ins Hauptbecken 20 und somit in den Ansaugbereich der Pumpenanlagen 41 gezogen werden könnten.

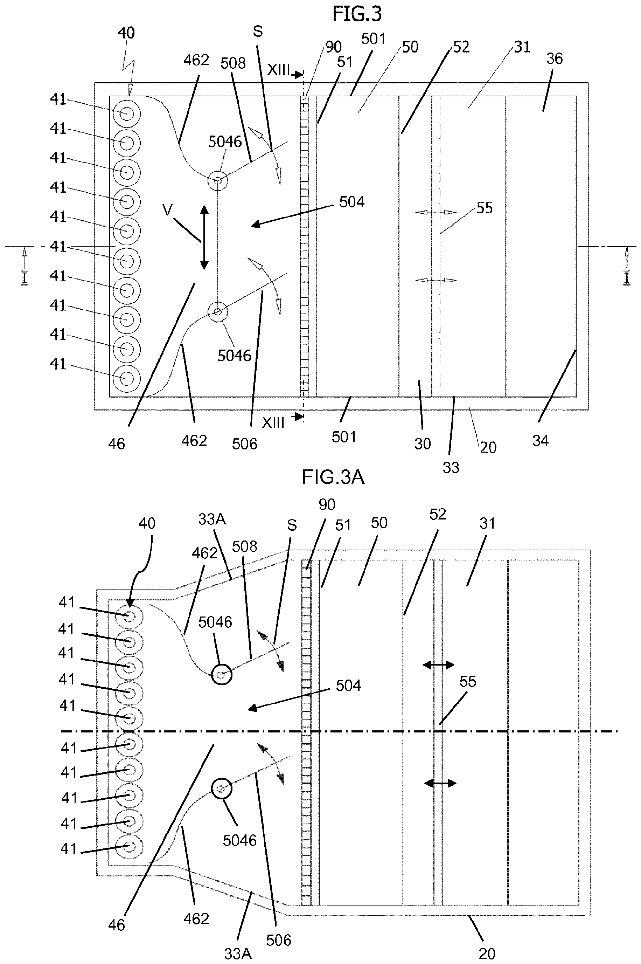

Im in den Figuren 1 bis 3A linken Teil des Hauptbeckens 20, in den sich das Wellenbecken 30 aufgrund seiner Begrenzung mittels der Vorderwand 35 nicht erstreckt, ist eine insgesamt mit 40 bezeichnete Pumpenanlage 40 angeordnet, die sich im Ausführungsbeispiel aus mehreren, in Querrichtung nebeneinander angeordneten Pumpeneinheiten 41 zusammensetzt (siehe Fign. 3 und 3A). In jeder der Pumpeneinheiten 41 ist eine leistungsstarke volumetrisch fördernde Pumpe 45 angeordnet, die Wasser vom Bodenbereich des Hauptbeckens 20 ansaugt und nach oben drückt. Die Pumpeneinheiten 41 sind über wenigstens eine Austrittsöffnung 47 mit einem bevorzugt horizontal angeordneten, auch als Fließstrecke bezeichneten Wasserzulauf 46 verbunden, auf der das von den Pumpen 45 geförderte Wasser homogenisiert und anschließend durch sich in Fließrichtung verengende Seitenwände 462 beschleunigt wird. Die Seitenwände 462 können gerade oder - wie in den Figuren 3 und 3A dargestellt - gekrümmt ausgebildet sein. Die Seitenwände 462 können aus einem starren oder einem elastisch biegbaren Material bestehen und können auch mehrere teleskopisch aneinander oder ineinander verschiebbare Wandteile umfassen.

Im zweiten Teil der Fließstrecke 46 ist in Fließrichtung anschließend an die Seitenwände 462 wenigstens ein Strömungskanal 504 vorgesehen, der von wenigstens zwei bevorzugt parallel zueinander angeordneten Wänden 506 und 508 begrenzt wird. Die Wände 506, 508 des Strömungskanals 504 sind mittels wenigstens eines Antriebs 5046 wie durch den Doppelpfeil S (siehe Fign. 3, 3A und 11) angedeutet, kontinuierlich oder in einstellbaren Intervallen bevorzugt synchron rotatorisch hin- und her schwenkbar.

Anstelle einer rotatorischen Schwenkbewegung können die Wände 506, 508 alternativ auch eine translatorische, quer zur Fließrichtung des Wassers angeordnete Bewegung oder gemäß einer weiteren Alternative eine überlagerte rotatorisch-translatorische Bewegung ausführen. Wesentlich für die Erfindung ist, dass der von den Pumpen 45 geförderte Wasserstrom durch den wenigstens einen Strömungskanal 504 verengt und zur Erzeugung einer wandernden Welle 60 quer zur Fließrichtung des Wassers rotatorisch und/oder translatorisch hin-und her oder rotierend auf einer Kreisbahn bewegt wird.

Ein weiteres äußerst vorteilhaftes Detail der Erfindung ist ein Egalisator 90, der sich in Fließrichtung an den bewegbaren Strömungskanal 504 anschließt. Der aus mehreren, bevorzugt bündig nebeneinander angeordneten Hohlkörpern 94 gebildeter Egalisator 90 ist vor dem oberen Ende 51 der Rampe 50 so angeordnet, dass die Längsachsen 95 der Hohlkörper 94 senkrecht zu im Wellenbecken 30 angeordneten Leitprofilen (Floatern) 55 angeordnet sind. Dadurch wird das durch den Strömungskanal 504 von der Rampe 50 herabfließende Wasser unabhängig vom jeweiligen Schwenkwinkel des Strömungskanals 504 durch den Egalisator 90 wieder so ausgerichtet, dass es im Wesentlichen senkrecht zu den quer im Wellenbecken 30 angeordneten Floatern 54, 55 oder 56 auf diese zuströmt.

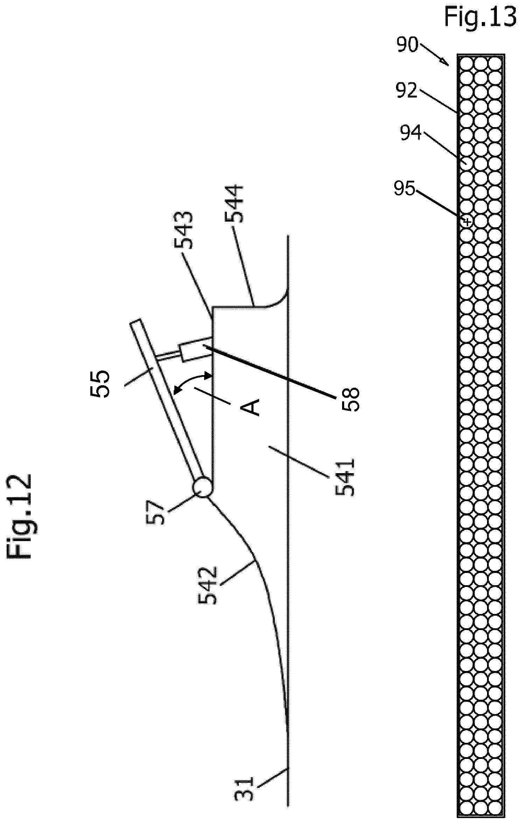

Die Hohlkörper 94 sind bevorzugt als Rohrabschnitte mit rundem Querschnitt ausgebildet, die von einem gemeinsamen, die Hohlkörper 94 umgebenden Rahmen 92 umgeben sind (siehe Fig. 13). Die Hohlkörper 94 können jedoch auch in anderen Querschnittsformen, wie beispielsweise quadratisch, rechteckig, dreieckig, sechseckig, achteckig oder oval ausgebildet sein. Die zwischen den Hohlkörpern 94 gebildeten Zwischenräume dienen dabei bevorzugt ebenfalls als zu den Längsachsen 95 parallel angeordnete Strömungskanäle des Egalisators 90.

Der Egalisator kann beispielsweise bei einer Breite des Wellenbeckens 30 von 18 m von einem Paket von Rohren 94 gebildet werden, die jeweils einen Durchmesser von etwa 100 bis 150 mm aufweisen. Die Rohre 94 sind innerhalb des sie umgebenden Rahmens 92 beispielsweise in sechs bis acht Lagen übereinander angeordnet. Die Länge der Rohre 94 beträgt in Strömungsrichtung vorteilhaft zwischen 200 mm und 500 mm, insbesondere etwa 300 mm.

Bei einer Breite des in den Fign. 1 bis 3A gezeigten Wellenbeckens 30 von 18 m verengen die Seitenwände 461 die an die Pumpenanlage 40 in Strömungsrichtung anschließende Fließstrecke 46 bevorzugt so, dass der Strömungskanal 504 in etwa ein Drittel der Gesamtbreite, also etwa 6 m Breite aufweist.

Der Egalisator 90 ist vorteilhaft bei allen in den verschiedenen Figuren dargestellten Surfanlagen 10 und darüber hinaus auch bei bereits bekannten Surfanlagen vorteilhaft verwendbar. Bei einem kreisförmigen Wellenbecken 30 oder einem kreissektorförmigen Wellenbecken 30 ist der Egalisator 90 an dessen Rundung angepasst oder aus mehreren polygonartig aneinandergefügten Segmenten zusammengesetzt.

Auf der dem Wellenbecken 30 zugewandten Seite der Fließstrecke 46 schließt sich an diese das obere Ende 51 einer zum Wellenbecken 30 hin schräg nach unten abfallenden Rampe 50 an. Die Rampe 50 taucht mit ihrem unteren Ende 52 unmittelbar über dem Boden 31 in das Wellenbecken 30 ein. Das untere Ende 52 der Rampe 50 steht somit im Wasser des Wellenbeckens 30. Bevorzugt ist eine feste Anordnung der Rampe 50. Gemäß einer Variante kann diese jedoch auch in ihrer Neigung verstellbar sein.

Bei der in Figur 3A gezeigten Variante weist das Wellenbecken 30 und vorzugsweise auch das Hauptbecken 20 ausgehend von der Pumpenanlage 40 durch schräg stehende Seitenwände 33 A eine Erweiterung auf.

In einem Abstand vom unteren Ende 52 der Rampe 50 ist in Strömungsrichtung wenigstens eine verstellbare Leitvorrichtung angeordnet. Die Leitvorrichtung wird gemäß einer ersten Ausführungsform von einem über die gesamte Breite einteiligen Leitprofil 55 gebildet, das mittels einer Verstellmechanik 58 in seinem Schwenkwinkel bezüglich der Strömung veränderbar am Boden 31 des Wellenbeckens 30 oder gemäß Figur 12 auf einer ebenen Oberseite 543 eines gegenüber dem Boden 31 erhabenen Sockels 541 angeordnet ist. Der Sockel 541 weist ausgehend vom Boden 31 des Wellenbeckens 30 eine ansteigende vordere Flanke 542 und eine abfallende hintere Flanke 544 auf.

Die Verstellmechanik 58 ist gemäß Fig. 12 beispielhaft in Form eines Pneumatikzylinders ausgebildet, der zwischen einer Lagerung auf der Oberseite 543 des Sockels 541 oder bei Fehlen eines Sockels 541 nahe des Bodens 31 des Wellenbeckens 30 und einer Anlenkung nahe der Hinterkante auf der Unterseite des Leitprofils 55 angeordnet ist. Als Verstellmechanik 58 können aber auch andere Aggregate, wie beispielsweise ein mit einem Getriebe oder einer Zahnstange gekoppelter elektrischer Schrittschaltmotor dienen. Die Verstellung der Leitprofile 55 kann in einer einfachen Variante auch manuell im Ruhezustand bei abgeschalteten Pumpen 45 (gemäß Figur 1) erfolgen.

Das Leitprofil 55 kann zumindest in einem Teil seines Schwenkbereichs frei floatend in der Strömung und/oder mechanisch in seinem Winkel A (Fig. 12) bezüglich der Strömung einstellbar gelagert sein. Bei einer zumindest im Endbereich frei floatenden Anordnung der Hinterkante des Leitprofils 55 ist dessen maximaler Ausstellwinkel A beispielsweise durch ein am Boden 31 oder an der Oberseite 543 des Sockels 541 befestigtes, nicht dargestelltes Band begrenzt.

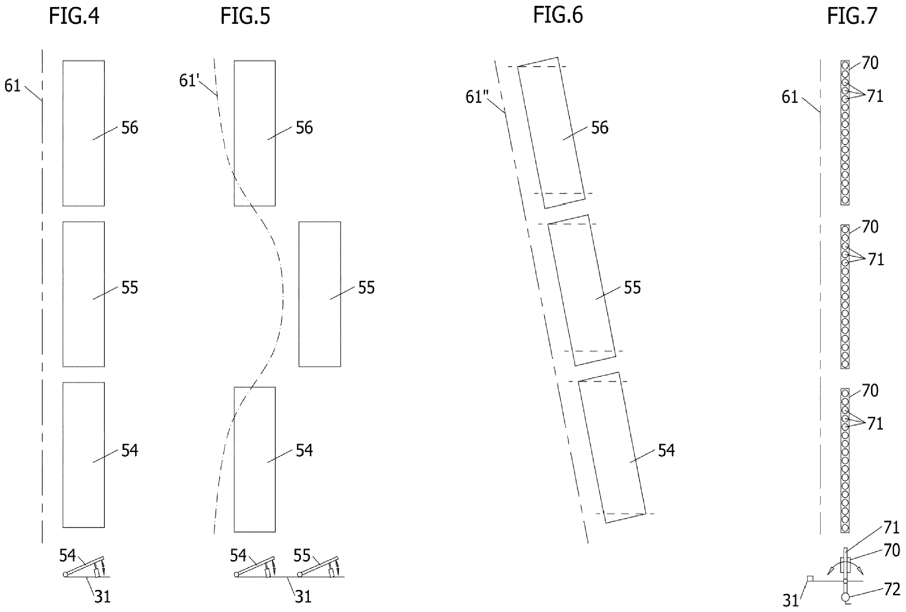

Die Figuren 4 bis 6 zeigen drei Beispiele für eine durch eine unterschiedliche Anordnung mehrerer Leitprofile 54, 55, 56 anstelle eines einzigen durchgehenden Leitprofils 55 erzielbare Wellenform 61. Die Wellenform 61 gibt dabei jeweils schematisch in einer Draufsicht den Kamm der sich einstellenden Welle 60 wieder.

In Fig. 4 befinden sich alle drei Leitprofile 54, 55, 56 parallel zueinander auf einer Linie, wobei die Lücken zwischen den Leitprofilen 54, 55 und 56 in der Realität so eng als möglich ausgebildet sind. Der sich ausbildende Wellenkamm bildet sich im Wellenbecken 30 entsprechend senkrecht zur Strömungsrichtung bzw. zu den Seitenwänden 33 aus.

In Fig. 5 ist das mittlere Leitprofil 55 etwas weiter vom unteren Ende 52 der Rampe 50 entfernt als die beiden äußeren Leitprofile 54 und 56. Die Welle 60 Wellenform 61 nimmt dadurch die gezeigte geschwungene Wellenform 61' mit einer Ausbauchung in Strömungsrichtung im mittleren Bereich an. Beim Surfen auf einer derartigen Welle erfolgt jeweils eine relative Beschleunigung beim Fahren zur Mitte hin und eine relative Verlangsamung beim Fahren von der Mitte nach außen.

In Fig. 6 sind alle drei Leitprofile 54, 55, 56 parallel zueinander auf einer Linie angeordnet, die unter einem Winkel schräg zur Strömungsrichtung bzw. zu den Seitenwänden 33 steht. Die dieser Schräge folgende Wellenform 61" bewirkt beim Surfen eine relative Beschleunigung beim Befahren in Richtung auf das rechte Leitprofil 54 zu und eine relative Verzögerung beim Befahren in der Gegenrichtung.

Die gezeigten Bespiele stellen nur eine kleine Auswahl der möglichen erzeugbaren Wellenformen 61 dar. Es sind auch mehr oder weniger als die drei gezeigten Leitprofile 54, 55, 56 möglich, so dass sich bei deren teilweise gerader und/oder teilweise schräger und/oder teilweise zueinander versetzter Anordnung über die gezeigten Beispiele hinaus eine Vielzahl von Wellenformen 61 möglich ist.

Die Leitprofile 54, 55, 56 können optional in ihrer Breite teleskopisch verstellbar sein. Dies lässt sich in einfacher Weise durch eine zumindest partielle Doppelwandigkeit erreichen, wobei an wenigstens einem der Wandteile Führungsmittel für eine relative Verschiebung des anderen Wandteils vorgesehen sind. Es kann sich gemäß einer einfachen Variante auch ein einziges durchgehendes Leitprofil 55 in einer bogenförmigen Anordnung quer über das gesamte Wellenbecken 30 erstrecken.

An Stelle der Leitprofile 54, 55, 56 oder ergänzend zu diesen können zur Förderung der Ausbildung einer stehenden Welle 60 auch Düsen 71 als Leitvorrichtungen verwendet werden, die entweder an den Leitprofilen 54, 55, 56 angeordnet sind, oder die - wie in Fig. 7 gezeigt - an Düsenleisten 70 angeordnet sind, die am Boden 31 des Wellenbeckens 30 oder alternativ dazu auf dem Sockel 541 bevorzugt schwenkbar angeordnet sind. Die Düsen 71 werden von einer oder mehreren, bevorzugt in ihrer Leistung steuer- oder regelbarer Pumpen 72 gespeist, die Wasser aus dem Wellenbecken 30 oder aus dem Hauptbecken 20 ansaugen und unter einem hohen, mittels der Pumpenleistung variierbaren Druck zu den Düsen 71 fördern. Der eine senkrechte Komponente zur Hauptströmung im Wellenbecken 30 aufweisende, aus den Düsen austretende Wasserstrahl fördert die Ausbildung der Welle 60 in ähnlicher Weise wie die Leitprofile 54, 55, 56. Die Düsenleisten 70 können dementsprechend nicht nurwie in Fig. 7 gezeigt - auf einer Linie quer zur Hauptströmung im Wellenbecken 30 angeordnet sein, sondern auch die in den Figuren 5 und 6 gezeigten Anordnungen oder Mischformen davon annehmen. Durch die schwenkbare Anordnung der Düsen 71 bzw. der Düsenleisten 70 gegenüber dem Boden 31 des Wellenbeckens können diese nicht nur senkrecht nach oben gerichtet sein, sondern auch unter einem beliebigen Winkel zur Hauptströmung - entgegen oder in Richtung derselben - ausgerichtet sein.

Im Ruhezustand der Surfanlage 10 gemäß Figur 1 füllt eine Gesamtwassermenge das Hauptbecken 20 und auch das darin befindliche Wellenbecken 30 entsprechend der Höhe der untersten geöffneten Klappe 361, 362, 363 oder 364 der Vorrichtung zur Abflussregulierung 36. Beim Betrieb der Surfanlage 10 gemäß Figur 2 laufen die Pumpen 45 an und fördern sehr schnell Wasser vom Hauptbecken 20 über die Austrittsöffnung 47 auf die Fließstrecke 46. Von dort fließt das Wasser beschleunigt durch die Verengung mittels der Wände 462 in den Strömungskanal 504. Im Strömungskanal 504 wird das Wasser begrenzt und geleitet entsprechend der jeweiligen Position und Ausrichtung der Wände 506, 508. Anschließend wird das Wasser im Egalisator 90 gerichtet und mit Sauerstoff angereichert. Von dort fließt das Wasser auf die Rampe 50 und mit zunehmender Geschwindigkeit zum unteren Ende 52 der Rampe 50 hinab. Am unteren Ende 52 trifft dieses schnell fließende Wasser auf das sich relativ dazu in ruhigerer Lage befindliche oder langsamer fließende Wasser im Wellenbecken 30. Das die Rampe 50 herabströmende Wasser wird von der trägen Masse des nahezu stehenden oder langsamer fließenden Wassers im Wellenbecken 30 zurückgestaut und nach oben zu einer stehenden Welle 60 geformt, die sich im Wellenbecken 30 als stationärer Zustand einstellt und die somit durch die kontinuierlich oder diskontinuierlich wandernde Bewegung des Strömungskanals 504 eine seitlich wandernde surfbare Welle bildet.

Die Ausbildung der stehenden Welle 60 wird dabei von den als Wellenformer dienenden Leitprofilen 54, 55, 56 unterstützt. Aus dem Wellenbecken 30 fließt das Wasser über die Vorrichtung zur Abflussregulierung 36 zurück ins Hauptbecken 20 und wird dort erneut auf der gegenüberliegenden Stirnseite des Hauptbeckens 20 von den Pumpen 45 angesaugt. Die die Vorrichtung zur Abflussregulierung beherbergende Rückwand 34 des Wellenbeckens 30 ist bevorzugt in Strömungsrichtung schräg ansteigend ausgebildet.

Im einfachsten Fall bildet sich die im Wellenbecken 30 oder in einem unterhalb der Rampe 50 angeordneten natürlichen Gewässer vorhandene Wassermasse durch den Betrieb der Pumpen 45 dynamisch aus, so dass keine physikalisch definierte Überlaufkante zum Hauptbecken 20 erforderlich ist. Im Ruhezustand der Pumpen 45 gemäß Fig. 1 entspricht das Niveau des Wassers im Wellenbecken 30 dem Niveau des Wassers im Hauptbecken 20. Sobald die Pumpen 45 Wasser aus dem Hauptbecken 20 ansaugen und über die Fließstrecke 46 und die Rampe 50 ins Wellenbecken 30 fördern, sinkt das Niveau des Wassers im Hauptbecken 20 unter das Niveau des Wassers im Wellenbecken 30, so dass in jedem Falle ein definierter Überlauf ins Hauptbecken 20 erfolgt. Das Wasser wird in einem geschlossenen Kreislauf mittels der Pumpen 45 vom Hauptbecken 20 ins Wellenbecken 30 gefördert, von wo es ins Hauptbecken 20 zurückläuft.

Die Erfindung ist auf einer mobilen Anlage realisierbar, die beispielhaft etwa folgende Maße und Werte aufweist, wobei alle diese Werte nur exemplarisch und keineswegs beschränkend sind: Das Hauptbecken 20 ist etwa 25 bis 30 m lang und ca. 20 m breit. Die Wasserhöhe im Hauptbecken 20 beträgt im Ruhezustand der etwa zehn Pumpen 45 etwa 1,80 m. Das Wellenbecken 30 ist etwa 25 m lang und etwa 6 bis 20 m breit. Der Boden 31 des Wellenbeckens 30 liegt etwa 1,20 m oberhalb des Bodens des Hauptbeckens 20. Die Wasserhöhe im Wellenbecken 30 beträgt somit im Ruhezustand etwa 0,60 m. Im Betrieb beträgt die Wasserhöhe H1 auf der Fließstrecke 46 etwa 1 m, im Wellenbecken 30 stromauf der Welle 60 etwa 0,40 bis 0,50 m und stromab der Welle 60 etwa 0,80 m. Der Strömungskanal 504 weist im Anschluss an die Verengung der Fließstrecke 46 eine Breite von etwa 6 bis 10 m auf. Die Schichtdicke des herabströmenden Wassers auf der Rampe 50 liegt je nach eingestellter Förderleistung der Pumpen 45 etwa zwischen 0,50 m und 1,20 m. Die Strömungsgeschwindigkeit des Wassers am unteren Ende der Rampe 50 beträgt bis zu 6 m/s. Entsprechend der zunehmenden Geschwindigkeit des Wassers beim Herabströmen der Rampe 50 vermindert sich dessen Schichtdicke nach unten hin. Die stehende Welle 60 erreicht dabei eine Höhe von bis etwa 1,5 m (gemessen vom Boden 31 des Wellenbeckens 30).

Für die Mobilität der Surfanlage 10 ist es vorteilhaft, wenn zumindest Teile derselben, wie beispielsweise die Pumpeneinheiten 41 von Containern mit Standardmaßen gebildet werden, von denen gegebenenfalls mehrere durch zwischengeschaltete Dichtungen miteinander verbunden werden.

Die Pumpenanlage 40 weist eine Gesamthöhe von etwa 2,80 m auf. Die zehn Pumpeneinheiten 41 haben eine Breite von jeweils etwa 2 m. Jede Pumpe 45 fördert etwa 2 m³ Wasser pro Sekunde. Die Breite der Fließstrecke 46 verjüngt sich zwischen dem Eintritt aus den Pumpeneinheiten 41 bis zum Eintritt in den Strömungskanal 504 in ihrer Breite von 20 m auf etwa 6,5 bis 10 m. Die Länge der Fließstrecke 46 vom Wasserzulauf 47 einschließlich des Strömungskanals 504 und des Egalisators 90 bis zum oberen Ende 51 der Rampe 50 beträgt etwa 10 bis 13m.

Die Rampe hat eine Länge von etwa 4 bis 5 m. Der Höhenunterschied zwischen oberem Ende 51 und unterem Ende 52 der Rampe 50 beträgt etwa 0,50 m.

An das untere Ende 52 der Rampe 50 schließt sich der Raum im Wellenbecken 30 an, in dem sich die stehende Welle 60 ausbildet. Dieser weist vor den Leitprofilen 54, 55, 56 eine Länge von etwa 2 m und hinter diesen eine Länge von etwa 3 bis 4 m auf. Daran schließt sich über eine Länge von etwa 3 bis 4 m die schräg nach hinten ansteigende Rückwand 34 an, in welcher die Vorrichtung zur Abflussregulierung 36 zwischen Wellenbecken 30 und Hauptbecken 20 angeordnet ist. Die Leitprofile 54, 55, 56 selbst weisen eine Länge von etwa 25 cm auf.

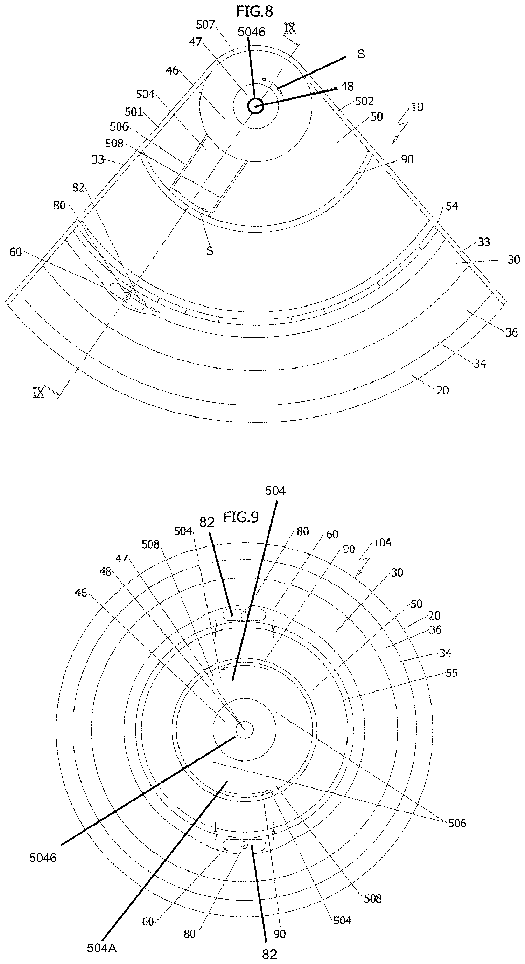

In den Figuren 8 bis 13 sind verschiedene Ausführungsformen einer erfindungsgemäßen Surfanlage 10 gezeigt. Im Unterschied zur vorstehend beschriebenen Surfanlage mit einem rechteckigen Wellenbecken weisen die Surfanlage gemäß den Figuren 8 bis 11 Wellenbecken 30 auf, die einem Kreissektor entsprechen, der einen Zentriwinkel von 10° bis hin zu einem Vollkreis von 360° aufweisen kann.

Bei der Surfanlage 10 in Figur 8 beträgt dieser Zentriwinkel knapp 90°. In den Figuren 10 und 11 sind zwei Surfanlage 10A und 10B gezeigt, deren Wellenbecken 30 jeweils einen Vollkreis bildet.

Die Surfanlage 10 bzw. 10A und 10B ist vollständig in einem Hauptbecken 20 angeordnet, welches das Wellenbecken 30 vollständig umgibt und in der Form bevorzugt an das Wellenbecken 30 angepasst ist. Das Hauptbecken 20 weist einen etwas größeren Radius auf als das Wellenbecken 30.

Das Wellenbecken 30 ist vom Hauptbecken 20 durch eine Vorrichtung zur Abflussregulierung 36 getrennt, die über eine Verstellmechanik 37 den Wasserstand im Wellenbecken 30 und bevorzugt zusätzlich durch verstellbare Klappen 361, 362, 363, 364 oder Öffnungen unter der Wasserlinie auch dessen Abströmgeschwindigkeit zum Hauptbecken 20 und eine Rückströmung 62 in Richtung zum Floater 54, 55, 56 auf ein unterschiedliches Niveau einstellen kann, wodurch die Höhe und Form der sich ausbildenden Welle 60 beeinflusst werden kann.

Das über die Vorrichtung zur Abflussregulierung 36 fließende Wasser wird vom Hauptbecken 20 aufgenommen und unterhalb und/ oder seitlich des Wellenbeckens 30 zu einer Pumpenanlage 40 zurückgeführt. Die Pumpenanlage 40 umfasst bevorzugt mehrere Pumpeneinheiten 41, deren Pumpen 45 einzeln oder in Gruppen zu- und abschaltbar sind. Hierdurch kann die von der Pumpenanlage 40 geförderte Wassermenge in einer großen Bandbreite variiert werden

Bei einer kreisförmigen oder kreissektorförmigen Surfanlage gemäß den Figuren 8 bis 10 fördert die Pumpenanlage 40 das Wasser zu einem zentral im Bereich des Mittelpunkts des Kreises oder Kreissektors angeordneten Wasserzulauf 47. Von dort fließt das Wasser über eine horizontale oder in Strömungsrichtung leicht abfallende Fließstrecke 46, die zu einer Vergleichmäßigung des Wasserstroms dient. Auf der Fließstrecke 46 ist auch der wenigstens eine oszillierend oder rotierend bewegbare Strömungskanal 504 angeordnet. Die Strömungskanäle 504 werden jeweils von zwei Seitenwänden 506 bzw. 508 begrenzt. Die Wände 506, 508 schließen mit ihrer Unterseite dicht an die Oberfläche der Fließstrecke 46 an. Die Dichtung kann beispielsweise mittels einer Gummileiste erfolgen, die auf der Oberfläche der Fließstrecke 46 anliegt und bei einer Bewegung des Strömungskanals auf dieser gleitet.

An die Fließstrecke 46 schließt sich eine nach außen abfallende Rampe 50 an, die aufgrund der kreisförmigen oder kreissektorförmigen Ausgestaltung der Surfanlage 10 eine kegelstumpfförmige bzw. einem Sektor eines Kegelstumpfs entsprechende Form aufweist.

Das untere Ende 52 der Rampe 50 mündet in das Wellenbecken 30. In einem Abstand zum unteren Ende 52 der Rampe 50 sind auf einer zum Mittelpunkt 48 konzentrischen Bahn oder auf einer in einem flacheren Bogen verlaufenden Bahn oder auf einer geraden oder polygonförmigen Bahn Leitvorrichtungen in Form von einem oder mehreren Leitprofilen 55 und/oder in Form der in der Figur 7 gezeigten Düsenleisten 70 angeordnet. Die Leitprofile 55 und/oder die Düsenleisten 70 sind in diesem Fall bevorzugt an die Kontur der Bahn angepasst.

Die Wände 506, 508 sind bevorzugt mit einem Tragwerk bzw. einer Schwenkvorrichtung verbunden, die an einem festen oder bewegbaren Lager um wenigstens eine Drehachse 5048 drehbar gelagert ist. Die Drehung erfolgt mittels wenigstens eines bevorzugt im Bereich der Drehachse 5048 angeordneten Antriebs 5046. Wie in den Figuren 3 und 3A dargestellt, können die den Strömungskanal 504 begrenzenden Wände 506 bzw. 508 auch von zwei separaten, bevorzugt synchron angesteuerten Antrieben 5046 geschwenkt werden. Beim Ausführungsbeispiel gemäß Figur 8 können die Wände 506 und 508 an ihrem hinteren Ende mit einer weiteren, halbkreisförmig ausgebildeten Wand 507 verbunden sein, die den Wasserzulauf 47 umgibt und dafür sorgt, dass das geförderte Wasser überwiegend in den Strömungskanal 504 fließt.

Beim Ausführungsbeispiel gemäß Figur 8 wird der Strömungskanal 504 mittels des Antriebs 5046 um die Drehachse 5048 oszillierend hin- und her bewegt, so wie durch den Doppelpfeil S dargestellt. Durch die schmale Kanalisierung des herabströmenden Wassers im Bereich des Strömungskanals 504 bildet sich beim Auftreffen auf das stehende oder langsamer fließende Wasser im Wellenbecken 30 jeweils nur in einem Teilbereich unterhalb des Strömungskanals 504 eine stehende Welle 60 aus, die mit der Schwenkbewegung des Strömungskanals 504 seitwärts mit hin- und herwandert.

Ein schematisch dargestellter Surfer 80 kann dadurch mit seinem Surfbrett 82 auf der weiter wandernden Welle 60 entlang einer Kreisbahn auf einem größeren Weg quer durch das Wellenbecken 30 surfen. Beim Ausführungsbeispiel gemäß Figur 8 wendet er dabei kurz vor Erreichen einer Seitenwand 33 des Wellenbeckens 30 und folgt dann wieder der zurückwandernden Welle 60, die vom zurückschwenkenden Strömungskanal 504 in die Gegenrichtung bewegt wird.

In Figur 9 ist eine Surfanlage 10A gezeigt, bei der das Wellenbecken 30 und das umgebende Hauptbecken 20 einem Vollkreis entsprechen. Dementsprechend ist auch die Rampe 50 als Vollkreis kegelstumpfförmig ausgebildet. Bei der Surfanlage 10A sind zwei um 180° gegenüberliegend angeordnete Strömungskanäle 504 vorgesehen. Somit werden gleichzeitig gegenüberliegend zwei stehende Wellen 60 im Wellenbecken 30 erzeugt und durch eine Rotation der Strömungskanäle 504 in eine wandernde Seitwärtsbewegung versetzt. Dadurch können auf der Surfanlage 10 A gleichzeitig zwei Surfer 80 surfen.

Bei der in Figur 10 gezeigten Surfanlage 10B sind im Unterschied zur Surfanlage 10A drei Strömungskanäle 504 jeweils um 120° versetzt zueinander angeordnet. Dadurch werden bei einer Rotation der Strömungskanäle 504 gleichzeitig drei wandernde stehende Wellen 60 erzeugt, die von drei Surfern 80 genutzt werden können.

Je nach Größe der Anlage können auch mehr als drei Strömungskanäle 504, beispielsweise vier oder mehr Strömungskanäle 504 vorgesehen sein.

Die erfindungsgemäße, in den Figuren 8 bis 10 gezeigte Surfanlage ermöglicht einem Surfer 80 oder mehreren Surfern 80 ein völlig neues Wellenreit-Erlebnis, bei dem eine Welle 60 auf einer größeren Strecke befahren werden kann.

Wie schon im Zusammenhang mit den Figuren 1 bis 3A dargestellt, ist die erfindungsgemäße Surfanlage 10 jedoch auch in Verbindung mit einem rechteckigen Wellenbecken 30 realisierbar. Im Bereich der Fließstrecke 46 findet über trichterförmig in Strömungsrichtung aufeinander zulaufende Begrenzungswände 462 eine weitere Beschleunigung der Strömungsgeschwindigkeit statt. Die oberhalb der Rampe 50 angeordneten, den Strömungskanal 504 begrenzenden Wände 506 bzw. 508 sind entweder quer zur Strömungsrichtung verschiebbar, quer zur Strömungsrichtung schwenkbar oder in einer Kombination aus beiden verschiebbar und schwenkbar (translatorisch und/oder rotatorisch) angeordnet. Dadurch erzeugt die vom quer zur Strömungsrichtung bewegbaren Strömungskanal 504 über die Rampe 50 in das Wellenbecken 30 gerichtete Wasserströmung die Ausbildung einer changierend hin- und herwandernden Welle 60 im Bereich der Leitprofile (Floater) 54, 55, 56.

In Figur 11 ist eine Variante einer erfindungsgemäßen Surfanlage dargestellt, die in einen natürlichen Flusslauf eingebaut ist. Der Einbau erfolgt dabei bevorzugt im Bereich eines Wehrs, das durch das im Bodenbereich abfallende Flussbett eine natürliche Rampe 50 bildet. Eine oberhalb des Wehrs, d. h. der Rampe 50 liegende Fließstrecke 46 wird durch zwei Seitenwände 461 in Strömungsrichtung trichterförmig verengt, bevor sie in einen Strömungskanal 504 übergeht, der von einer ersten Wand 506 und einer davon beabstandeten zweiten Wand 508 begrenzt wird.

Die Wände 506 bzw. 508 sind entsprechend des Pfeils S mittels eines Antriebs 5046 schwenkbar in eine gestrichelt dargestellte Position 506A bzw. 508A, in der der Strömungskanal 504A schräg zur Strömungsrichtung in der Fließstrecke 46 steht. Die Schwenkbewegung des Strömungskanals 504A erfolgt dabei kontinuierlich oder diskontinuierlich. Die Schwenkbewegung kann dabei bevorzugt durch ein Steuergerät mit wenigstens einem verstellbaren Parameter oder wenigstens einem Programm über eine entsprechende Ansteuerung der Antriebe 5046 erfolgen. Dies gilt auch für alle anderen Ausführungsformen in den übrigen Figuren.

Alternativ oder überlagernd zur Schwenkung gemäß des Pfeils S ist auch eine translatorische Verschiebung des Strömungskanals 504 gemäß des Pfeils V möglich.

Durch die Verengung der Fließstrecke 46 mittels der trichterförmigen Wände 461 erfolgt eine Beschleunigung der Wasserströmung, die durch die abfallende Rampe 50 im Wehrbereich noch vergrößert wird. Durch das Hin- und Herbewegen des Strömungskanals 504 mittels Schwenkung und/oder Verschiebung wird unterhalb der Rampe 50 in einem Bereich 30 langsamer fließenden Wassers, der hier das Wellenbecken 30 der anderen Ausführungsbeispiele ersetzt, eine hin-und herwandernde stehende Welle 60 erzeugt, die von einem Surfer 80 mit seinem Surfbrett 82 befahrbar ist.

Die Vorrichtung mit den Wänden 461 und den Wänden 506 bzw. 508 ist gemäß einer alternativen Ausführungsform mittels eines Antriebs beispielsweise mittels eines über den Flusslauf gespannten umlaufenden Seilzuges bewegbar. Im Gegensatz zu einer künstlichen Surfanlage 10 entfällt bei dieser in einem fließenden Gewässer angeordneten Surfanlage der Energieaufwand für den Betrieb der Pumpenanlage 40 vollständig.

Eine weitere Option für eine vorteilhafte Ausgestaltung der erfindungsgemäßen Surfanlage besteht darin, dass die Bewegungsgeschwindigkeit des Strömungskanals 504 veränderbar ist. Dies kann beispielsweise auch automatisiert erfolgen, indem eine nicht dargestellte Kamera den Surfer 80 beobachtet, ein Steuergerät die Geschwindigkeit von dessen Positionsveränderung auswertet und ein entsprechendes Signal an den Antrieb 5046 zum Schwenken und/oder translatorischen Verschieben des Strömungskanals 504 gibt.

Statt nur eines Strömungskanals 504 sind auch Ausführungsformen möglich, bei denen mehrere Strömungskanäle 504 nebeneinander angeordnet sind. Wenn diese mit unterschiedlich starken Teil-Wasserströmen beschickt werden, ist zusätzlich eine besondere Formung der Welle 60 über deren Breite möglich.

In Fig. 12 ist eine alternative, besonders bevorzugte Ausführungsform der Erfindung gezeigt. Im Unterschied zu den Figuren 4 bis 7 ist hier ein durchgehendes Leitprofil 55, auch Floater 55 genannt, im Wellenbecken 30 angeordnet. Die Seitenansicht dieses Floaters 55 ist in Figur 12 dargestellt. Der Floater 54 ist in diesem Falle nicht am Boden 31 des Wellenbeckens 30, sondern auf einem am Boden 31 angeordneten Sockel 541 vorgesehen.

Der Sockel 541 weist eine strömungsgünstig ansteigend geformte vordere Flanke 542, eine im Wesentlichen waagerechte, plateauförmige Oberseite 543 und eine nach hinten abfallende Flanke 544 auf. Das Schwenklager 57 des Floaters 54 ist in diesem Fall an der Oberkante der vorderen Flanke 542 bzw. im vorderen Bereich der Oberseite 543 angeordnet. Die beispielhaft als Pneumatikzylinder ausgebildete Verstellmechanik 58 kann bevorzugt zumindest teilweise im Sockel 541 versenkt angeordnet sein. Mittels der Verstellmechanik 58 kann der Ausstellwinkel A des Floaters 54 und dadurch die Form und die Höhe der Welle 60 verändert werden. Die in Fig. 12 dargestellte Anordnung des Floaters 54 auf einem Sockel 541 kann auch für die in den anderen Figuren dargestellten Floater 54, 55, 56 und auch für die Düsenleisten 70 Anwendung finden. Der Sockel 541 ist in einer vorteilhaften Variante mitsamt den Floatern 54, 55, 56 bzw. den Düsenleisten 70 komplett im Boden 31 des Wellenbeckens 30 versenkbar, so dass das Wellenbecken 30 auch als Schwimmbecken mit vollständig glattem Boden nutzbar ist.

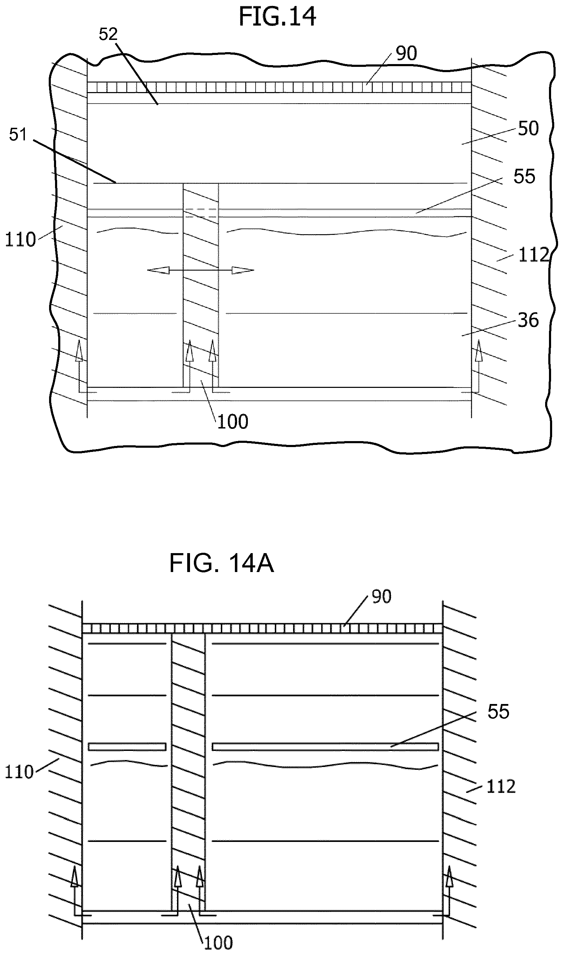

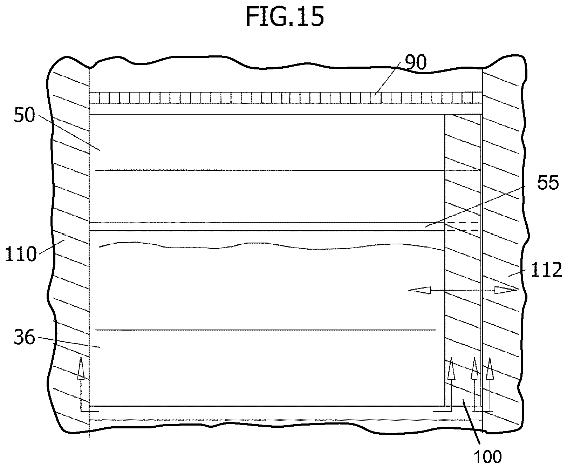

In den Figuren 14,14A und 15 ist ein weiteres vorteilhaftes Merkmal der erfindungsgemäßen Surfanlage 10 dargestellt. Dabei ist in Figur 14 unterhalb der Rampe 50 im Wellenbecken 30 wenigstens ein quer zum Wellenbecken 30, d. h. senkrecht zur Hauptströmung des Wassers verschiebbar gelagerter Strömungsteiler 100 vorgesehen, der auch als Divider 100 bezeichnet wird. Durch den verschiebbar gelagerten Strömungsteiler 100 wird das Wellenbecken 30 in unterschiedliche Teilbereiche aufgeteilt. Das Wellenbecken 30 kann dadurch an unterschiedliche Anforderungen hinsichtlich der Anzahl und des Leistungsstandes der Surfer angepasst werden. So kann beispielsweise bei einer relativ schwachen Nachfrage (beispielsweise wenn nur wenige Surfer mit Anfängerniveau surfen wollen) nur der in Figur 14 links des Strömungsteilers 100 liegende Teil des Wellenbeckens 30 vom oberhalb des Egalisators 90 liegenden, hier nicht dargestellten Strömungskanal 504 mit einer hin- und her wandernden Welle 60 versorgt werden. Dabei kann die Menge des von den Pumpen 45 geförderten Wassers deutlich reduziert und somit durch Drosselung der Pumpenleistung oder Abschaltung einer Reihe von Pumpen 45 eine erhebliche Menge an Energie eingespart werden. Wenn die Zahl oder die Ansprüche der potenziellen Kunden der Surfanlage 10 ansteigen, kann der genutzte Bereich des Wellenbeckens 30 durch Verschiebung des Strömungsteilers 100 wieder beliebig vergrößert oder der in Figur 14 rechts vom Strömungsteiler 100 liegende größere Bereich vom Strömungskanal 504 mit einer hin- und her wandernden Welle 60 beaufschlagt werden. Wenn die volle Breite des Wellenbeckens 30 genutzt werden soll, wird der wenigstens eine Strömungsteiler, wie in Figur 15 dargestellt, an eine Seitenwand des Wellenbeckens 30 gefahren oder alternativ auch vollkommen aus dem Wellenbecken 30 entfernt.

Bei der in Figur 14A gezeigten Variante erstreckt sich der Strömungsteiler 100 in einer im Bereich des unteren Endes 52 der Rampe 50 entsprechend der Neigung der Rampe 50 nach oben abgeknickten Form auch in den Bereich der Rampe 50 hinein.

Der wenigstens eine Strömungsteiler 100 hat im unteren Bereich in Höhe des Leitprofils 55 eine Aussparung, sodass er seitlich über das Leitprofil 55 hinweg verfahren werden kann.

Wie aus den Figuren 14, 14A und 15 ersichtlich, ist der Bereich rechts und links des Wellenbeckens 30 und jenseits der Rückwand 34 des Wellenbeckens 30 durch Laufstege 110, 112, 114 begehbar. Die Laufstege 110, 112, 114 sind durch nicht dargestellte Geländer gesichert und durch Treppen oder Leitern an einer Stirnseite bzw. seitlich des Hauptbeckens 20 erreichbar. Die gesamte Surfanlage 10 kann aber auch teilweise oder vollständig in den Boden eingelassen sein, so dass die Laufstege 110, 112, 114 dann ebenerdig erreichbar sind oder auch auf diese verzichtet werden kann.

**Bezugszeichenliste**

| | | | |
|---|---|---|---|
| 10 | Surfanlage | 5048 | Drehachse |
| 10A | Surfanlage (Fig. 11) | 506 | Wand |
| 20 | Hauptbecken | 506A | Wand |
| 30 | Wellenbecken (bzw. langsamer Fließbereich) | 508 | Wand |
| | | 508A | Wand |
| 31 | Boden (von 30) | 51 | oberes Ende (von 50) |
| 32 | Stütze | 52 | unteres Ende (von 50) |
| 33 | Seitenwand (von 30) | 54 | Leitprofil (Floater) |
| 34 | Rückwand | 541 | Sockel |
| 35 | Vorderwand | 542 | (vordere) Flanke (ansteigend) |
| 36 | Vorrichtung zur Abflussregulierung (von 30 in 20) | 543 | Oberseite |
| | | 544 | (hintere) Flanke (abfallend) |
| 361 | Klappe | 55 | Leitprofil (Floater) |
| 362 | Klappe | 56 | Leitprofil (Floater) |
| 363 | Klappe | 57 | Schwenklager |
| 364 | Klappe | 58 | Verstellmechanik (für 54 - 56) |
| 37 | Verstellmechanik (für 36) | 60 | Welle |
| 40 | Pumpenanlage | 61 | Wellenform |
| 41 | Pumpeneinheit | 62 | Rückstromwirbel |
| 45 | Pumpe | 70 | Düsenleiste |
| 46 | Wasserzulauf (Fließstrecke) | 71 | Düse |
| 462 | Seitenwand (von 46) | 72 | Pumpe |
| 47 | Wasserzulauf (Austrittsöffnung von 40 in 46) | 80 | Surfer |
| | | 82 | Surfbrett |
| 48 | Mittelpunkt | 90 | Egalisator |
| 50 | Rampe | 92 | Rahmen (von 90) |
| 501 | Seitenwand (von 50) | 94 | Hohlkörper (Rohr) |
| 504 | Strömungskanal | 95 | Längsachse (von 94) |
| 504A | Strömungskanal | 100 | Strömungsteiler (Divider) |
| 504B | Strömungskanal | 110 | (seitlicher) Laufsteg |
| 5046 | Antrieb | 112 | (seitlicher) Laufsteg |
| 114 | (hinterer) Laufsteg | | |
| H1 | Wasserhöhe (in 46 bei Betrieb) | | |
| A | Schwenkwinkel (von 55) | | |
| S | Schwenkrichtung (Pfeil) | | |
| V | Verschieberichtung (Pfeil) | | |

## Patentansprüche

1. Surfanlage (10, 10A, 10B) zur Erzeugung einer surfbaren Welle (60), mit einer geneigten Rampe (50), zu deren oberem Ende (51) über einen Wasserzulauf (46) Wasser strömt, das auf der Rampe (50) auf eine erste Fließgeschwindigkeit beschleunigt wird, wobei das untere Ende (52) der Rampe (50) in einem Wellenbecken (30) oder in einen Bereich (30) mit einer gegenüber der ersten Fließgeschwindigkeit geringeren zweiten Fließgeschwindigkeit ausmündet und wobei sich im Bereich (30) durch das Auftreffen des mit der ersten, schnelleren Fließgeschwindigkeit strömenden Wassers auf das mit der zweiten, geringeren Fließgeschwindigkeit strömenden Wassers eine in Strömungsrichtung stehende Welle (60) ausbildet, **dadurch gekennzeichnet, dass** im Bereich des Wasserzulaufs (46) und/oder der Rampe (50) wenigstens zwei wenigstens einen Strömungskanal (504) begrenzende Wände (506, 508) angeordnet sind, die zur Erzeugung wenigstens einer quer zur Strömungsrichtung wandernden Welle (60) mittels wenigstens eines Antriebs (5046) quer zur Strömungsrichtung des Wassers rotatorisch und/oder translatorisch bewegbar sind.

2. Surfanlage nach Anspruch 1, **dadurch gekennzeichnet, dass** der Wasserzulauf (46) und die Rampe (50) Teil eines zirkulierenden Systems sind, bei dem das untere Ende (52) der Rampe (50) in ein den Bereich (30) mit der geringeren zweiten Fließgeschwindigkeit bildendes Wellenbecken (30) ausmündet, von dem das Wasser über wenigstens eine Pumpenanlage (40) erneut zum Wasserzulauf (46) gefördert wird.

3. Surfanlage nach Anspruch 2, **dadurch gekennzeichnet, dass** das Wellenbecken (30) von einem Hauptbecken (20) oder von einem stehenden oder fließenden Gewässer umgeben wird.

4. Surfanlage nach Anspruch 2 oder 3, **dadurch gekennzeichnet, dass** das Wellenbecken (30) in Form eines Rechtecks oder in Form eines Kreissektors mit einem Kreiswinkel von 10° bis 360° gebildet ist.

5. Surfanlage nach Anspruch 4, **dadurch gekennzeichnet, dass** der Wasserzulauf (46) im Bereich des Mittelpunkts (48) des Kreissektors angeordnet ist.

6. Surfanlage nach einem der vorhergehenden Ansprüche, **dadurch gekennzeichnet, dass** die einen Strömungskanal (504) begrenzenden Wände (506, 508) mittels einer Kulisse (5042) mit einem Antrieb (5046) verbunden sind oder durch mehrere, jeweils einer Wand ((506, 508) zugeordnete, synchron betätigbare Antriebe (5046) während einer Schwenkbewegung oder Verschiebebewegung des Strömungskanals (504) im Wesentlichen parallel geführt werden.

7. Surfanlage nach einem der vorhergehenden Ansprüche, **dadurch gekennzeichnet, dass** die Bewegung der den Strömungskanal (504) begrenzenden Wände (506, 508) als alternierend hin-und hergehende Schwenkbewegung oder Verschiebebewegung oder als Rotationsbewegung in eine Richtung erfolgt.

8. Surfanlage nach einem der vorhergehenden Ansprüche, **dadurch gekennzeichnet, dass** die Pumpenanlage (40) zur Dosierung der Fördermenge des Wassers im Wasserzulauf (46) mehrere in ihrer Förderleistung veränderbare und/oder einzeln oder in Gruppen zuschaltbare Pumpeneinheiten (41) umfasst.

9. Surfanlage nach einem der vorhergehenden Ansprüche, **dadurch gekennzeichnet, dass** die einen Strömungskanal (504) begrenzenden Wände (506, 508) zur Veränderung der Breite und/oder des Winkels des Strömungskanals (504) verstellbar gelagert sind.

10. Surfanlage nach einem der vorhergehenden Ansprüche, **dadurch gekennzeichnet, dass** im Wellenbecken (30) in einem Abstand von einem unteren Ende (52) der Rampe (50) wenigstens eine Leitvorrichtung (54, 55, 56; 70, 71) angeordnet ist.

11. Surfanlage nach Anspruch 10, **dadurch gekennzeichnet, dass** die Leitvorrichtung (54, 55, 56; 70, 71) als fester Einbau, als bezüglich seiner Lage und Ausrichtung verstellbarer Einbau, als komplett im Boden (31) des Wellenbeckens (30) versenkbarer Einbau oder als längs wenigstens einer Führung bewegbares Bauteil, insbesondere auf einem vom Boden (31) des Wellenbeckens (30) erhabenen Sockel (541) ausgebildet ist.

12. Surfanlage nach Anspruch 10 oder 11, **dadurch gekennzeichnet, dass** die Leitvorrichtung (54, 55, 56; 70, 71) wenigstens ein um ein Schwenklager (57) schwenkbares Leitprofil (54, 55, 56) und/oder wenigstens eine mittels wenigstens einer Pumpe (72) beaufschlagbare, wenigstens eine Düse (71) umfassende Düsenleiste (70) aufweist.

13. Surfanlage nach einem der Ansprüche 1 bis 12, **dadurch gekennzeichnet, dass** in Strömungsrichtung vor der Rampe (50) ein Egalisator (90) vorgesehen ist, der mehrere Hohlkörper (94) aufweist, deren Längsachsen (95) senkrecht zu einem oberen Ende (51) der Rampe (50) ausgerichtet sind.

14. Surfanlage nach einem der Ansprüche 1 bis 13, **dadurch gekennzeichnet, dass** im Wellenbecken (30) und/oder im Bereich der Rampe (50) wenigstens ein quer zur Fließrichtung verschiebbarer Strömungsteiler (100) anordenbar ist.

15. Surfanlage nach einem der Ansprüche 2 bis 14, **dadurch gekennzeichnet, dass** der Wasserstand und/oder die geringere zweite Fließgeschwindigkeit in Strömungsrichtung hinter der Welle (60) durch wenigstens eine vorzugsweise mittels einer Verstellmechanik (37) verstellbare Vorrichtung zur Abflussregulierung (36) regelbar ist.

## Claims

1. Surfing installation (10, 10A, 10B) for generating a surfable wave (60), comprising an inclined ramp (50) to the upper end (51) of which water flows via a water inlet (46), which water is accelerated on the ramp (50) to a first flow speed, the lower end (52) of the ramp (50) leading into a wave pool (30) or into a region (30) having a lower second flow speed relative to the first flow speed, and a standing wave (60), in the flow direction, forming in the region (30) as a result of the water flowing at the first, faster flow speed striking the water flowing at the second, lower flow speed, **characterized in that** at least two walls (506, 508) that define at least one flow channel (504) are arranged in the region of the water inlet (46) and/or of the ramp (50), which walls are movable in rotation and/or in translation, transversely to the flow direction of the water, by means of at least one drive (5046), in order to generate at least one traveling wave (60) that travels transversely to the flow direction.

2. Surfing installation according to claim 1, **characterized in that** the water inlet (46) and the ramp (50) are part of a circulating system in which the lower end (52) of the ramp (50) leads into a wave pool (30) that forms the region (30) having the lower second flow speed, from which the water is delivered again to the water inlet (46), via at least one pumping system (40).

3. Surfing installation according to claim 2, **characterized in that** the wave pool (30) is surrounded by a main pool (20) or by a standing or flowing body of water.

4. Surfing installation according to either claim 2 or claim 3, **characterized in that** the wave pool (30) is formed in the shape of a rectangle or in the shape of a circular sector having an inscribed angle of from 10° to 360°.

5. Surfing installation according to claim 4, **characterized in that** the water inlet (46) is arranged in the region of the center (48) of the circular sector.

6. Surfing installation according to any of the preceding claims, **characterized in that** the walls (506, 508) defining a flow channel (504) are connected to a drive (5046) by means of a link (5042), or are guided substantially in parallel, by means of a plurality of synchronously actuatable drives (5046) that are assigned to one wall (506, 508), respectively, during a pivoting movement and/or displacement movement of the flow channel (504).

7. Surfing installation according to any of the preceding claims, **characterized in that** the movement of the walls (506, 508) defining the flow channel (504) is performed as an alternating back and forth pivoting movement or as a displacement movement or as a rotational movement, in one direction.

8. Surfing installation according to any of the preceding claims, **characterized in that** the pumping system (40) for metering the discharge of the water in the water inlet (46) comprises a plurality of pumping units (41), the delivery rate of which can be changed and/or which can be connected individually or in groups.

9. Surfing installation according to any of the preceding claims, **characterized in that** the walls (506, 508) defining a flow channel (504) are mounted such that they can be adjusted and/or raised in order to change the width and/or the angle of the flow channel (504).

10. Surfing installation according to any of the preceding claims, **characterized in that** at least one guide device (54, 55, 56; 70, 71) is arranged in the wave pool (30) so as to be at a spacing from a lower end (52) of the ramp (50).

11. Surfing installation according to claim 10, **characterized in that** the guide device (54, 55, 56; 70, 71) is designed as a fixed assembly, as an assembly that is adjustable with respect to the position and orientation thereof, as an assembly that can be completely sunk in the base (31) of the wave pool (30), or as a component that is movable along at least one guideway, and in particular is formed on a pedestal (541) that is raised from the base (31) of the wave pool (30).

12. Surfing installation according to either claim 10 or claim 11, **characterized in that** the guide device (54, 55, 56; 70, 71) comprises at least one guide profile (54, 55, 56) that is pivotable about a pivot bearing (57), and/or at least one nozzle strip (70) which comprises at least one nozzle (71) and on which at least one pump (72) can act.

13. Surfing installation according to any of claims 1 to 12, **characterized in that** an equalizer (90) is arranged upstream of the ramp (50) in the flow direction, which equalizer comprises a plurality of hollow bodies (94), the longitudinal axes (95) of which are arranged so as to be perpendicular to an upper end (51) of the ramp (50).

14. Surfing installation in particular according to any of claims 1 to 13, **characterized in that** at least one flow divider (100) that is displaceable transversely to the flow direction can be arranged in a wave pool (30) and/or in the region of a ramp (50).

15. Surfing installation according to any of claims 2 to 14, **characterized in that** the water level and/or the lower second flow speed in the flow direction behind the wave (60) can be regulated by at least one device for drainage regulation (36) that is preferably adjustable by means of adjustment mechanics (37).

## Revendications

1. Installation de surf (10, 10A, 10B) destinée à produire une vague (60) sur laquelle on peut surfer, comportant une rampe (50) inclinée, de l'eau s'écoulant par l'intermédiaire d'une entrée d'eau (46) vers l'extrémité supérieure (51) de ladite rampe (50), ladite eau se précipitant sur la rampe à un premier débit, l'extrémité inférieure (52) de la rampe (50) débouchant dans un bassin à vagues (30) ou dans une zone (30) présentant un second débit plus faible que le premier débit, et une vague (60) stationnaire se formant dans la zone (30) dans le sens d'écoulement par l'impact de l'eau s'écoulant au premier débit plus élevé sur l'eau s'écoulant au second débit plus faible, **caractérisée en ce qu'**au moins deux parois (506, 508) délimitant au moins un canal d'écoulement (504) sont disposées dans la zone de l'entrée d'eau (46) et/ou de la rampe (50), lesquelles parois peuvent être déplacées en rotation et/ou en translation transversalement par rapport au sens d'écoulement de l'eau au moyen d'au moins un dispositif d'entraînement (5046) pour la production d'au moins une vague (60) se déplaçant transversalement par rapport au sens d'écoulement.

2. Installation de surf selon la revendication 1, **caractérisée en ce que** l'entrée d'eau (46) et la rampe (50) font partie d'un système à circulation dans lequel l'extrémité inférieure (52) de la rampe (50) débouche dans un bassin à vagues (30) formant la zone (30) présentant le second débit inférieur, bassin à partir duquel l'eau est à nouveau amenée vers l'entrée d'eau (46) par l'intermédiaire d'au moins une installation de pompe (40).

3. Installation de surf selon la revendication 2, **caractérisée en ce que** le bassin à vagues (30) est entouré par un bassin principal (20) ou par une eau stagnante ou en écoulement.

4. Installation de surf selon la revendication 2 ou 3, **caractérisée en ce que** le bassin à vagues (30) est réalisé sous la forme d'un rectangle ou sous la forme d'un secteur circulaire avec un angle de cercle compris entre 10 et 360°.

5. Installation de surf selon la revendication 4, **caractérisée en ce que** l'entrée d'eau (46) est disposée dans la zone du point central (48) du secteur circulaire.

6. Installation de surf selon l'une des revendications précédentes, **caractérisée en ce que** les parois (506, 508) délimitant le canal d'écoulement (504) sont reliées à un dispositif d'entraînement (5046) au moyen d'une coulisse (5042), et sont guidées de manière sensiblement parallèle par plusieurs dispositifs d'entraînement (5046) pouvant être actionnés de manière synchrone et associés chacun à une paroi (506, 508) pendant un mouvement de pivotement et/ou un mouvement de déplacement du canal d'écoulement (504).

7. Installation de surf selon l'une des revendications précédentes, **caractérisée en ce que** le mouvement des parois (506, 508) délimitant le canal d'écoulement (504) s'effectue sous la forme d'un mouvement de pivotement ou de déplacement de va-et-vient ou d'un mouvement de rotation dans une direction.

8. Installation de surf selon l'une des revendications précédentes, **caractérisée en ce que** l'installation de pompe (40) destinée au dosage du débit de l'eau dans l'entrée d'eau (46) comprend une pluralité d'unités de pompe (41) à débit variable et/ou pouvant être raccordées individuellement ou par groupes.

9. Installation de surf selon l'une des revendications précédentes, **caractérisée en ce que** les parois (506, 508) délimitant un canal d'écoulement (504) sont montées de manière réglable pour modifier la largeur et/ou l'angle du canal d'écoulement (504).

10. Installation de surf selon l'une des revendications précédentes, **caractérisée en ce qu'**au moins un dispositif de guidage (54, 55, 56 ; 70, 71) est disposé dans le bassin à vagues (30) à distance d'une extrémité inférieure (52) de la rampe (50).

11. Installation de surf selon la revendication 10, **caractérisée en ce que** le dispositif de guidage (54, 55, 56 ; 70, 71) est conçu sous la forme d'une installation fixe, sous la forme d'une installation ajustable en position et en orientation, sous la forme d'une installation complètement escamotable dans le fond (31) du bassin à vagues (30) ou sous la forme d'un composant mobile le long d'au moins un guidage, en particulier sur un socle (541) surélevé par le fond (31) du bassin à vagues (30).

12. Installation de surf selon la revendication 10 ou 11, **caractérisée en ce que** le dispositif de guidage (54, 55, 56 ; 70, 71) présente au moins un profilé de guidage (54, 55, 56) pouvant pivoter autour d'un palier de pivot (57) et/ou au moins une barre de buse (70) comprenant au moins une buse (71) pouvant être sollicitée au moyen d'au moins une pompe (72).

13. Installation de surf selon l'une des revendications 1 à 12, **caractérisée en ce qu'**un égalisateur (90) est prévu dans le sens d'écoulement devant la rampe (50), lequel présente une pluralité de corps creux (94) ou de canaux (97) constitués de parois de séparation (96), dont les axes longitudinaux (95) sont alignés perpendiculairement à une extrémité supérieure (51) de la rampe (50) ou orientés parallèlement à leur ligne de pente (53).

14. Installation de surf selon l'une des revendications 1 à 13, **caractérisée en ce qu'**au moins un diviseur d'écoulement (100) déplaçable de manière transversale au sens d'écoulement peut être disposé dans le bassin à vagues (30) et/ou dans la zone de la rampe (50).

15. Installation de surf selon l'une des revendications 2 à 14, **caractérisée en ce que** le niveau d'eau et/ou la seconde vitesse d'écoulement plus faible peuvent être réglés dans le sens d'écoulement derrière la vague (60) par au moins un dispositif réglable, de préférence au moyen d'un mécanisme de réglage (37) pour le réglage du débit (36).
